# EUROPÄISCHE PATENTSCHRIFT

(11) **EP 2 178 985 B1**
(45) Veröffentlichungstag und Bekanntmachung des Hinweises auf die Patenterteilung: **20.10.2010**
(21) Anmeldenummer: 08759259.8
(22) Anmeldetag: 17.06.2008
(51) Int. Cl.: C09B 67/22, C09B 67/04, C09B 67/12, C08K 5/00, G03F 7/00, C09D 11/00

(54) **FEINTEILIGE EPSILON-KUPFERPHTHALOCYANIN-PIGMENTZUBEREITUNG**
FINE-PARTICLE EPSILON COPPER PHTHALOCYANINE PIGMENT PREPARATION
PRÉPARATION PIGMENTAIRE À PARTICULES FINES À BASE D'EPSILON-PHTALOCYANINE DE CUIVRE

(30) Priorität: 17.07.2007 DE 102007033191
(43) Veröffentlichungstag der Anmeldung: 28.04.2010
(73) Patentinhaber: Clariant Finance (BVI) Limited, Road Town, Tortola (VG)
(72) Erfinder: METZ, Thomas, 64646 Heppenheim (DE); SCHÄFER, Wolfgang, CH-4434 Hölstein (CH)
(74) Vertreter: Hütter, Klaus
(86) Internationale Anmeldenummer: PCT/EP2008/004855
(87) Internationale Veröffentlichungsnummer: WO 2009/010141

(56) Entgegenhaltungen:
- EP-A- 0 014 907
- EP-A- 0 014 962
- EP-A- 0 090 285
- EP-A- 1 130 065
- EP-A- 1 510 556
- WO-A-02/04563
- DE-A1- 3 522 742

## Beschreibung

Die vorliegende Erfindung betrifft eine Pigmentzubereitung aus fein verteiltem Kupferphthalocyanin in der epsilon-Modifikation (Pigment Blau 15:6, CI 74160) und mindestens einem weiteren Pigment aus der Gruppe der organischen Blau-, Violett- oder Rot-Pigmente und deren Verwendung insbesondere in Farbfiltern.

Für Blaupigmente besteht oftmals ein Verbesserungsbedarf hinsichtlich der Farbstärke, Farbtonreinheit, Transparenz, Rheologie und ihres Kontrastwertes im Falle von Farbfilteranwendungen. Die für Farbfilter eingesetzten Blaupigmente basieren hauptsächlich auf Kupferphthalocyaninpigmenten, insbesondere in der epsilon Modifikation (C.I. Pigment Blau 15:6).

Von den drei Kristallmodifikationen des Kupferphthalocyanins, die kommerziell von Bedeutung sind, nämlich der alpha- (C.I. Pigment Blau 15:1 und 15:2), beta- (C.I. Pigment Blau 15:3 und 15:4) und epsilon-Modifikation (C.I. Pigment Blau 15:6), stellt die epsilon Modifikation die Kristallphase mit dem rotstichigsten Blau dar. Weiterhin besitzt sie eine hohe Farbstärke und zeigt einen besonders reinen Farbton. Diese Eigenschaften machen C.I. Pigment Blau 15:6 besonders interessant für spezielle Anwendungen zum Beispiel im Lack, Druck oder Kunststoff sowie im Bereich der Farbfilter für den Einsatz in optischen Displays oder als pigmentierte Photoresists.

Die thermodynamische Stabilität der epsilon-Phase liegt zwischen der alpha- und der beta-Phase. Dies erschwert die phasenreine Herstellung der epsilon-Modifikation.

Die Herstellung der epsilon-Modifikation kann nach verschiedenen Verfahren erfolgen: durch eine gezielte Rohblausynthese (US-3 051 721, US 4,135,944), durch Behandlung von Kupferphthalocyanin in organischen Lösemitteln und deren Gemischen mit Wasser (DE-2 210 072, EP-1 580 239) bzw. durch Salzknetung (EP-1 130 065).

Insbesondere bei den Verfahren, die Additive zur Phasenstabilisierung einsetzen, sollten solche Additive angestrebt werden, die sowohl bei einer Lösemittelbehandlung als auch in einer Salzknetung phasenstabilisierend wirken. Bislang sind jedoch nur Phthalocyanin-basierende Additive beschrieben, die eine solche breit einsetzbare Wirksamkeit zeigen. Sie haben jedoch meist den Nachteil, den Farbton in Richtung Grün zu verschieben.

In den Druckschsiften EP, A, 1, 510, 556 sowie EP, A, 1, 130, 065 werden z.B. Kupferphthalocyaninpigment präparate beschsieben, die Nuanciermittel enthalten.

Ziel der vorliegenden Erfindung war, ein hochtransparentes Farbmittel mit rotstichigem Blaufarbton insbesondere für den Einsatz von Effektlacken im Automobilbau sowie Industrielacken, Color Filtern, Ink Jet Tinten, elektrophotographischen Tonern und Entwicklern und e-inks zur Verfügung zu stellen.

Eine weitere Aufgabe der vorliegenden Erfindung bestand darin, ein Additiv zu finden, welches die Herstellung einer Kupferphthalocyanin-Zubereitung mit möglichst phasenreiner epsilon-Modifikation und mit möglichst rotstichigem Farbton ermöglicht. Weiterhin sollten die gewünschten Additive in verschiedenen Verfahrensstufen bei der Phthalocyanin-Synthese phasenstabilisierend wirken.

Die Aufgabe wurde überraschenderweise durch nachstehende Pigmentzubereitung gelöst.

Gegenstand der Erfindung ist eine Pigmentzubereitung aus C.I. Pigment Blau 15:6, enthaltend 0,1 bis 50 Gew.-%, vorzugsweise 1 bis 40 Gew.%, eines Nuancierfarbmittels aus der Gruppe C.I. Pigment Blau 80, C.I. Pigment Violett 23, C.I. Pigment Red 122, C.I. Pigment Violett 19, C.I. Pigment Red 177 sowie der Diketopyrrolopyrrol-Pigmente, insbesondere C.I. Pigment Rot 254, C.I. Pigment Rot 255 und C.I. Pigment Rot 264, sowie 0,5 bis 15 Gew.-%, vorzugsweise 1 bis 10 Gew.-%, insbesondere 2 bis 5 Gew.-%, eines Additivs der Formel (1), jeweils bezogen auf das Gewicht von C.I. Pigment Blau 15:6, 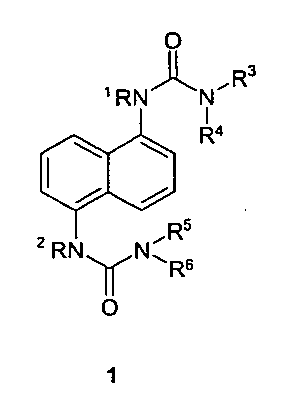 worin
R¹, R², R³, R⁴, R⁵ und R⁶ unabhängig voneinander Wasserstoff; C₁-C₂₂ Alkyl oder C₂-C₂₂ Alkenyl, deren Kohlenstoffkette jeweils durch eine oder mehrere Gruppierungen -O-, -S-, -NR⁹-, -CO- oder SO₂- unterbrochen sein kann und/oder ein- oder mehrfach durch Hydroxy, Halogen, Aryl, Heteroaryl, C₁-C₄ Alkoxy und/oder Acetyl substituiert sein kann;
C₃-C₈ -Cycloalkyl, dessen Kohlenstoffgerüst durch eine oder mehrere Gruppierungen -O-, -S-, -NR¹⁰-, -CO- oder SO₂- unterbrochen sein kann und/oder ein- oder mehrfach durch Hydroxy, Halogen, Aryl, Heteroaryl, C₁-C₄-Alkoxy und/oder Acetyl substituiert sein kann; Dehydroabietyl oder Aryl oder Heteroaryl, wobei
R⁹ und R¹⁰ unabhängig voneinander Wasserstoff oder C₁-C₂₂-Alkyl bedeuten, oder wobei R³, R⁴, R⁵ und R⁶ eine Polyoxyalkylenkette, die gegebenenfalls endständig alkyliert ist, bedeuten.

Aryl bedeutet dabei bevorzugt C₆-C₁₀-Aryl, insbesondere Phenyl oder Naphthyl. Heteroaryl bedeutet dabei bevorzugt einen fünf- oder sechsgliedrigen heteroaromatischen Ring mit 1, 2, 3 oder 4 Heteroatomen aus der Gruppe N, O und S, der gegebenenfalls benzoanneliert ist.
R¹, R², R⁴ und R⁶ bedeuten vorzugsweise Wasserstoff.
R³ und R⁵ bedeuten vorzugsweise (C₂-C₄-alkylen)-O-(C₁-C₁₆-alkyl).

Ein bevorzugtes Additiv im Sinne der vorliegenden Erfindung ist eine Verbindung der allgemeinen Formel (2) 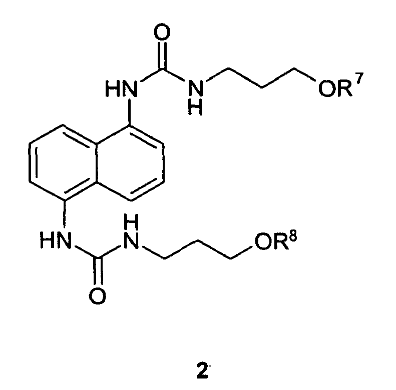 wobei
R⁷ und R⁸ unabhängig voneinander Wasserstoff; C₁-C₁₉ Alkyl oder C₂-C₁₉ Alkenyl, deren Kohlenstoffkette jeweils durch eine oder mehrere der Gruppierungen -O-, -S-, -NR⁹-, -CO- oder SO₂- unterbrochen sein kann und/oder ein- oder mehrfach durch Hydroxy, Halogen, C₁-C₄ Alkoxy und/oder Acetyl substituiert sein kann, oder ein Rest der Formel -(AO)ₙ-Z, wobei A Ethylen oder Propylen ist, Z Wasserstoff oder C₁-C₁₆-Alkyl, und n eine Zahl von 1 bis 200, bevorzugt 10 bis 100, ist; C₃-C₈-Cycloalkyl, dessen Kohlenstoffgerüst durch eine oder mehrere Gruppierungen -O-, -S-, -NR¹⁰-, -CO- oder SO₂- unterbrochen sein kann und/oder ein- oder mehrfach durch Hydroxy, Halogen, C₁-C₄-Alkoxy und/oder Acetyl substituiert sein kann; wobei
R⁹ und R¹⁰ unabhängig voneinander Wasserstoff oder C₁-C₂₂-Alkyl bedeuten.

Besonders bevorzugt im Sinne der vorliegenden Erfindung ist das Additiv der Formel (3)

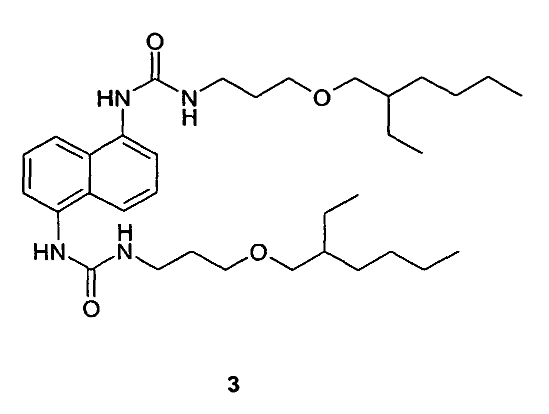

Additive der Formel (1), (2) und (3) können in an sich bekannter Weise durch Umsetzung von Naphthyldiisocyanat mit den entsprechenden Aminen hergestellt werden.

Besonders bevorzugt sind Pigmentzubereitungen aus C.I. Pigment Blau 15:6, enthaltend 2,5 bis 20 Gew.-% C.I. Pigment Blau 80, sowie 0,5 bis 15 Gew.-%, insbesondere 1 bis 10 Gew.-%, beispielsweise 2 bis 5 Gew.-%, eines Additivs der Formel (1), jeweils bezogen auf das Gewicht von C.I. Pigment Blau 15:6.

Besonders bevorzugt sind Pigmentzubereitungen aus C.I. Pigment Blau 15:6, enthaltend 2,5 bis 25 Gew.-% C.I. Pigment Violet 23, sowie 0,5 bis 15 Gew.-%, insbesondere 1 bis 10 Gew.-%, beispielsweise 2 bis 5 Gew.-%, eines Additivs der Formel (1), jeweils bezogen auf das Gewicht von C.I. Pigment Blau 15:6.

Besonders bevorzugt sind Pigmentzubereitungen aus C.I. Pigment Blau 15:6, enthaltend 20 bis 40 Gew.-% C.I. Pigment Red 122, sowie 0,5 bis 15 Gew.-%, insbesondere 1 bis 10 Gew.-%, beispielsweise 2 bis 5 Gew.-%, eines Additivs der Formel (1), jeweils bezogen auf das Gewicht von C.I. Pigment Blau 15:6.

Besonders bevorzugt sind Pigmentzubereitungen aus C.I. Pigment Blau 15:6, enthaltend 1 bis 25 Gew.-% C.I. Pigment Violet 19, sowie 0,5 bis 15 Gew.-%, insbesondere 1 bis 10 Gew.-%, beispielsweise 2 bis 5 Gew.-%, eines Additivs der Formel (1), jeweils bezogen auf das Gewicht von C.I. Pigment Blau 15:6. Besonders bevorzugt sind Pigmentzubereitungen aus C.I. Pigment Blau 15:6, enthaltend 1 bis 20 Gew.-% C.I. Pigment Red 177, sowie 0,5 bis 15 Gew.-%, insbesondere 1 bis 10 Gew.-%, beispielsweise 2 bis 5 Gew.-%, eines Additivs der Formel (1), jeweils bezogen auf das Gewicht von C.I. Pigment Blau 15:6.

Besonders bevorzugt sind Pigmentzubereitungen aus C.I. Pigment Blau 15:6, enthaltend 1 bis 20 Gew.-% C.I. Pigment Red 254, sowie 0,5 bis 15 Gew.-%, insbesondere 1 bis 10 Gew.-%, beispielsweise 2 bis 5 Gew.-%, eines Additivs der Formel (1), jeweils bezogen auf das Gewicht von C.I. Pigment Blau 15:6.

Die vorstehenden besonders bevorzugten Pigmentzubereitungen enthalten vorzugsweise das Additiv der Formel (2), insbesondere der Formel (3).

Auch in den Dokumenden EP, A, 014,962 sowie EP, A, 014,907 werden Kupferphthalocyaninpigment präparate beschrieben, die 1,5-Naphthylharnstoft derivate enthalten.

Die erfindungsgemäße Pigmentzubereitung kann noch weitere übliche Hilfsmittel oder Zusatzstoffe enthalten, wie beispielsweise Tenside, nichtpigmentäre Dispergiermittel, pigmentäre Dispergiermittel, vorzugsweise Phthalocyanin-Sulfonsäuren und - Sulfonsäuresalze, insbesondere primäre, sekundäre oder tertiäre Ammonium-Phthalocyaninsulfonate, Füllstoffe, Stellmittel, Harze, Wachse, Entschäumer, Antistaubmittel, Extender, Antistatika, Konservierungsmittel, Trocknungsverzögerungsmittel, Additive zur Steuerung der Rheologie, Netzmittel, Antioxidantien, UV-Absorber und Lichtstabilisatoren, vorzugsweise in einer Menge von 0,1 bis 25 Gew.-%, insbesondere 0,5 bis 15 Gew.-%, bezogen auf das Gesamtgewicht der Pigmentzubereitung. Als Tenside kommen anionische oder anionaktive, kationische oder kationaktive und nichtionische oder amphotere Substanzen oder Mischungen dieser Mittel in Betracht.

Gegenstand der Erfindung ist auch ein Verfahren zur Herstellung der erfindungsgemäßen Pigmentzubereitung, dadurch gekennzeichnet, dass man die einzelnen Komponenten in den angegebenen Mischungsverhältnissen miteinander vermischt. Die Komponenten können dabei in trockener Form oder als Suspension oder Presskuchen eingesetzt und durch übliche Misch- oder Knetapparaturen vermischt werden.

Weiterhin wurde überraschenderweise gefunden, dass die erfindungsgemäß eingesetzten Nuancierfarbmittel, die naturgemäß bei der Oberflächenbelegung des Kupferphthalocyanins mit dem Additiv der Formel (1) in Konkurrenz treten, die Bildung der epsilon-Kristallphase nicht beeinträchtigen. Daher kann man auch von Kupferphthalocyanin der alpha- oder gamma-Phase ausgehen, wenn man nachstehendes Herstellverfahren durchführt.

Gegenstand der Erfindung ist daher auch ein Verfahren zur Herstellung der erfindungsgemäßen Pigmentzubereitung, enthaltend Kupferphthalocyanin in der epsilon-Modifikation, dadurch gekennzeichnet, dass man Kupferphthalocyanin der alpha-Modifikation, der gamma-Modifikation, oder einer Mischung aus alpha- und gamma-Modifikation, in Gegenwart von 1 bis 50 Gew.-%, vorzugsweise 5 bis 15 Gew.-%, an kristalliner epsilon-Modifikation, und in Gegenwart von 0,1 bis 50 Gew.-%, vorzugsweise 1 bis 40 Gew.-%, eines Nuancierfarbmittels aus der Gruppe C.I. Pigment Blau 80, C.I. Pigment Violett 23, C.I. Pigment Red 122, C.I. Pigment Violett 19, C.I. Pigment Red 177 sowie der Diketopyrrolopyrrol-Pigmente, hier insbesondere C.I. Pigment Rot 254, C.I. Pigment Rot 255 und C.I. Pigment Rot 264;
sowie in Gegenwart von 0,5 bis 15 Gew.-%, vorzugsweise 1 bis 10 Gew.-%, insbesondere 2 bis 5 Gew.-%, eines Additivs der Formel (1), bevorzugt der Formel (2) und ganz besonders bevorzugt der Formel (3),
einer Nassvermahlung und/oder einer Lösemittelbehandlung in einem organischen Lösemittel bei einer Temperatur zwischen 30 und 250 °C unterzieht, wobei die Gewichtsprozente auf die eingesetzte Gesamtmenge an Kupferphthalocyanin bezogen sind.

Unter Nassvermahlung werden übliche Mahlverfahren in Perlmühlen oder Rührwerkskugelmühlen verstanden. Als Mahlkörper kommen alle in der Literatur bekannten in Betracht, beispielsweise Kugeln und als Materialen Stahl, Porzellan, Steatit, Oxide, wie zum Beispiel Aluminiumoxid, oder ggf. stabilisiertes Zirkonoxid, Mischoxide, wie zum Beispiel Zirkonmischoxid, oder Glas, wie zum Beispiel Quarzglas. Die Mahlung kann bei Temperaturen bis zu 150°C stattfinden, gewöhnlich werden Temperaturen kleiner 100°C angewendet. Die Verweilzeit richtet sich nach der Geschwindigkeit der Phasenumwandlung.

Eine besonders bevorzugte Form der Nassvermahlung ist die Salzknetung mit einem kristallinen Salz in Gegenwart eines organischen Lösemittels. Als kristallines Salz kommen bevorzugt anorganische Salze, beispielsweise Aluminiumsulfat, Natriumsulfat, Calciumchlorid, Kaliumchlorid oder Natriumchlorid in Betracht, bevorzugt Natriumsulfat, Natriumchlorid und Kaliumchlorid. Es ist von Vorteil das eingesetzte Salz durch eine Mahlung in eine feinteilige, mikronisierte Form zu überführen.

Als organisches Lösemittel kommen beispielsweise Ketone, Ester, Amide, Sulfone, Sulfoxide, Nitroverbindungen, Mono-, Bis- oder Tris-hydroxy-C₂-C₁₂-alkane, die mit C₁-C₈-alkyl und einer oder mehreren Hydroxygruppen substituiert sein können, in Betracht. Besonders bevorzugt sind mit Wasser mischbare hochsiedende organische Lösemittel auf Basis von monomeren, oligomeren und polymeren C₂-C₃-Alkylenglykolen, wie z. B. Diethylenglykol, Diethylenglykolmonomethyl- und ethylether, Triethylenglykol, Triethylenglykolmonomethyl- und -ethylether, Dipropylenglykol, Dipropylenglykolmonomethyl- und -ethylether, Propylenglykolmonomethyl- und -ethylether und flüssige Polyethylen- und Polypropylenglykole, N-Methylpyrrolidon sowie weiterhin Triacetin, Dimethylformamid, Dimethylacetamid, Ethylmethylketon, Cyclohexanon, Diacetonalkohol, Butylacetat, Nitromethan, Dimethylsulfoxid und Sulfolan.

Das Gewichtsverhältnis zwischen dem kristallinen Salz und dem Kupferphthalocyanin beträgt bevorzugt (2 bis 8) zu 1, insbesondere (5 bis 6) zu 1. Das Gewichtsverhältnis zwischen dem organischen Lösemittel und dem kristallinen Salz beträgt bevorzugt (1 ml : 6 g) bis (3 ml : 7 g).

Das Gewichtsverhältnis zwischen dem organischen Lösemittel und der Summe aus kristallinem Salz und Kupferphthalocyanin beträgt bevorzugt (1 ml : 2,5 g) bis (1 ml : 7,5 g).

Die Temperatur während der Knetung kann zwischen 40 und 140 °C, vorzugsweise 60 bis 120 °C, betragen. Die Knetdauer beträgt zweckmäßigerweise 4 h bis 32 h, bevorzugt 8 h bis 20 h.

Nach der Salzknetung wird das kristalline Salz und das organische Lösemittel zweckmäßigerweise durch Waschen mit Wasser entfernt und die so erhaltene Pigmentkomposition nach üblichen Verfahren getrocknet.

Gegebenenfalls schließt sich an die Nassvermahlung, insbesondere Salzknetung, ein Lösemittelfinish an. Geeignete Lösemittel für die Lösemittelbehandlung sind z. B. in der noch unveröffentlichten deutschen Patentanmeldung AZ 10 2007 001851.9 genannt. Die Lösemittelbehandlung wird zweckmäßigerweise für 1 bis 8 h und bei einer Temperatur zwischen 30 und 200°C, vorzugsweise 50 bis 120°C, durchgeführt.

Das erfindungsgemäße Additiv sowie das Nuancierfarbmittel kann vor und/oder während der Nassvermahlung bzw. vor und/oder während der Lösemittelbehandlung in einer oder mehreren Portionen in den genannten Mengen zugesetzt werden. Es hat sich gezeigt, dass bei größeren Mengen (über 15 Gew.-%) Additiv die Phasenumwandlung von der alpha zur epsilon Phase stark verlangsamt wird, so dass das Verfahren nicht mehr wirtschaftlich ist.

Es wurde gefunden, dass das erfindungsgemäß eingesetzte Naphthyl-Additiv sowohl bei einer einfachen Lösemittelbehandlung, als auch in einem Nassmahl-Prozess, wie beispielsweise in der Salzknetung, eine phasenstabilisierende Wirkung entfaltet.

Des Weiteren wurde gefunden, dass das Additiv bei dem erfindungsgemäßen Verfahren zum größten Teil auf der C.I. Pigment Blau 15:6 Oberfläche sowie auf dem Nuancierfarbmittel verbleibt.

Gegenstand der Erfindung ist auch eine Pigmentzubereitung, hergestellt nach dem vorstehend beschriebenen Verfahren.

Das eingesetzte alpha-Kupferphthalocyanin kann durch bekannte Verfahren, zum Beispiel ausgehend von einem Schwell- oder Lösungsprozess in 60 bis 100 gew.-%iger Schwefelsäure hergestellt werden. Der Einsatz von gamma-Kupferphthalocyanin, sowie von Gemischen aus alpha/gamma-Phase ist ebenfalls möglich.

Die Zugabe der epsilon-Impfkristalle zur alpha- und/oder gamma-Phase kann mit oder ohne vorherige Mahlung erfolgen, vorzugsweise werden die Mischungen jedoch durch eine Schwing-, Roll-, Kugel-, Planetenkugel- oder Perlmahlung hergestellt.

Die Nuancierfarbmittel können als Rohpigmente direkt aus der Pigmentsynthese, als feinteilige Zwischenprodukte aus der Pigmentformierung, oder in Form von bereits fertigen Handelsprodukten eingesetzt werden. Die Nuancierfarbmittel können auch in Form von Presskuchen zugegeben werden. Auch können die zugegebenen Nuancierfarbmittel durch eine Trocken- oder Nassvermahlung nach üblichen Methoden (z. B. Kugel-, Schwing-, Luftstrahlmahlung oder Salzknetung) vorbehandelt worden sein.

Die erfindungsgemäß hergestellte Pigmentzubereitung besitzt eine Primärpartikelgröße von vorzugsweise 20 bis 300 nm, insbesondere 20 bis 90 nm, und ein Längen/Breiten-Verhältnis des Primärkorns von (1,0 bis 6,0) zu 1, vorzugsweise (1,0 bis 3,0) zu 1. Die spezifische Oberfläche (BET) beträgt vorzugsweise 50 bis 100 m²/g.

Die erfindungsgemäße Pigmentzubereitung lässt sich allgemein zum Pigmentieren von hochmolekularen organischen Materialien natürlicher oder synthetischer Herkunft einsetzen, beispielsweise von Kunststoffen, Harzen, Lacken, vorzugsweise Metallic-Lacken, Anstrichfarben, elektrophotographischen Tonern und Entwicklern, Farbfiltern sowie von Tinten, vorzugsweise Ink-Jet-Tinten, und Druckfarben.

Hochmolekulare organische Materialien, die mit der erfindungsgemäßen Pigmentzubereitung pigmentiert werden können, sind beispielsweise Celluloseverbindungen, wie beispielsweise Celluloseether und -ester, wie Ethylcellulose, Nitrocellulose, Celluloseacetate oder Cellulosebutyrate, natürliche Bindemittel, wie beispielsweise Fettsäuren, fette Öle, Harze und deren Umwandlungsprodukte, oder Kunstharze, wie Polykondensate, Polyaddukte, Polymerisate und Copolymerisate, wie beispielsweise Aminoplaste, insbesondere Harnstoff- und Melaminformaldehydharze, Alkydharze, Acrylharze, Phenoplaste und Phenolharze, wie Novolake oder Resole, Harnstoffharze, Polyvinyle, wie Polyvinylalkohole, Polyvinylacetale, Polyvinylacetate oder Polyvinylether, Polycarbonate, Polyolefine, wie Polystyrol, Polyvinylchlorid, Polyethylen oder Polypropylen, Polyacrylate sowie Poly(meth)acrylate und deren Copolymerisate, wie Polyacrylsäureester oder Polyacrylnitrile, Polyamide, Polyester, Polyurethane, Cumaron-Inden- und Kohlenwasserstoffharze, Epoxidharze, ungesättigte Kunstharze (Polyester, Acrylate) mit den unterschiedlichen Härtemechanismen, Wachse, Aldehyd- und Ketonharze, Gummi, Kautschuk und seine Derivate und Latices, Casein, Silikone und Silikonharze; einzeln oder in Mischungen.

Dabei spielt es keine Rolle, ob die erwähnten hochmolekularen organischen Verbindungen als plastische Massen, Schmelzen oder in Form von Spinnlösungen, Dispersionen, Lacken, Anstrichstoffen oder Druckfarben vorliegen. Je nach Verwendungszweck erweist es sich als vorteilhaft, die erfindungsgemäßen Pigment-Kompositionen in Form von Präparationen oder Dispersionen zu benutzen.

Gegenstand der vorliegenden Erfindung ist daher auch ein hochmolekulares organisches Material, enthaltend eine färberisch wirksame Menge einer erfindungsgemäßen Pigmentzubereitung.

Bezogen auf das zu pigmentierende, hochmolekulare organische Material setzt man die erfindungsgemäße Pigmentzubereitung meist in einer Menge von 0,01 bis 30 Gew.-%, vorzugsweise 0,1 bis 15 Gew.-%, ein. Bei dem Einsatz in Colorfiltern können auch höhere Mengen eingesetzt werden, wie nachstehend erwähnt.

Die erfindungsgemäßen Pigmentzubereitungen sind auch geeignet als Farbmittel in elektrophotographischen Tonern und Entwicklern, wie beispielsweise Ein- oder Zweikomponentenpulvertonern (auch Ein- oder Zweikomponenten-Entwickler genannt), Magnettoner, Flüssigtoner, Polymerisationstoner sowie Spezialtoner.

Außerdem sind die erfindungsgemäßen Pigmentzubereitungen als Farbmittel in Ink-Jet Tinten auf wässriger und nichtwässriger Basis sowie in solchen Tinten, die nach dem Hot-melt-Verfahren arbeiten, geeignet.

Insbesondere sind die erfindungsgemäßen Pigmentzubereitungen als Farbmittel für Farbfilter, sowohl für die additive wie auch für die subtraktive Farberzeugung, wie beispielsweise in elektro-optischen Systemen wie Fernsehbildschirmen, LCD (liquid crystal displays), charge coupled devices, plasma displays oder electroluminescent displays, die wiederum aktive (twisted nematic) oder passive (supertwisted nematic) ferroelectric displays oder light-emitting diodes sein können, sowie als Farbmittel für elektronische Tinten ("electronic inks" bzw. "e-inks") oder "electronic paper" ("e-paper") geeignet.

Bei der Herstellung von Farbfiltern, sowohl reflektierender wie durchsichtiger Farbfilter, werden Pigmente in Form einer Paste oder als pigmentierte Photoresists in geeigneten Bindemitteln (Acrylate, Acrylester, Polyimide, Polyvinylalkohole, Epoxide, Polyester, Melamine, Gelantine, Caseine) auf die jeweiligen LCD-Bauteilen (z. B. TFT-LCD = Thin Film Transistor Liquid Crystal Displays oder z. B. ((S) TN-LCD = (Super) Twisted Nematic-LCD) aufgebracht. Neben einer hohen Thermostabilität ist für eine stabile Paste bzw. einem pigmentierten Photoresist auch eine hohe Pigmentreinheit Voraussetzung. Darüber hinaus können die pigmentierten Color Filter auch durch Ink Jet-Druckverfahren oder andere geeignete Druckverfahren aufgebracht werden.

Die rotstichigen Blaufarbtöne der erfindungsgemäßen Pigment-Kompositionen sind ganz besonders gut geeignet für den Color Filter Farbset Rot-Grün-Blau (R,G,B). Diese drei Farben liegen als getrennte Farbpunkte nebeneinander vor, und ergeben von hinten durchleuchtet ein Vollfarbbild.

Typische Farbmittel für den roten Farbpunkt sind Diketopyrrolopyrrol-, Chinacridon-, Anthrachinon- und Azopigmente, wie z. B. C.I. Pigment Rot 254, C.I. Pigment Rot 242 einzeln oder gemischt mit C.I. Pigment Rot 209,
C.I. Pigment Rot 177, C.I. Pigment Rot 175, C.I. Pigment Rot 122, C.I. Pigment Rot 48:1 und C.I. Pigment Orange 38, C.I. Pigment Orange 71 sowie C.I. Pigment Gelb 139.

Für den grünen Farbpunkt werden typischerweise Phthalocyaninfarbmittel eingesetzt, wie z. B. C.I. Pigment Green 36 und zum Nuancieren C.I. Pigment Gelb 139 und C.I. Pigment Gelb 214.

In koloristischen Ausprüfungen zeigte sich, dass die erfindungsgemäße Pigmentkomposition einen brillanten und für Color Filter Anwendungen geeigneten Farbton besitzt und im Vollton eine hohe Transparenz erzielt.

Die Herstellung der Color Filter kann nach üblichen Verfahren erfolgen: Die erfindungsgemäße Pigmentzubereitung wird in einem wässrigen oder nichtwässrigen System, das noch weitere Komponenten, wie z. B. Bindemittel, enthalten kann, dispergiert. Bindemittel können thermoplastisch, duroplastisch oder photoempfindlich sein. Beispiele von thermoplastischen und duroplastischen Bindemittel beinhalten Acrylate, Acrylester, Polyimide, Polyvinylalkohole, Epoxide, Polyester, Melamine, Gelatine, Caseine. Photoempfindliche Bindemittel sind an sich bekannt. Die so hergestellte Color Filter-Paste hat eine Konzentration an Pigmentzubereitung von 2,5 bis 80 Gew.-%.

Diese Dispersionen (Color-Filter-Pasten) können dann mittels Spincoating oder geeigneten konventionellen Druckverfahren (z. B. Flexo-, Offset-, Screen-, Intaglio- und Stempeldruck) oder berührungslosen Druckverfahren (z. B. Ink Jet) auf das Color Filter -Trägermaterial, typischerweise eine Glasplatte, aufgebracht werden.

Die Bildpunkte können auch durch Thermosublimation, Thermotransfer, Electrodeposition oder anderen geeigneten Aufbringungsverfahren erzeugt werden.

Die typische Einsatzkonzentration der erfindungsgemäßen Pigmentzubereitungen im aufgebrachten Color Filter-Film liegt zwischen 5 und 95 Gew.-%, bevorzugt zwischen 20 und 80 Gew.-%, ganz besonders bevorzugt zwischen 40 und 60 Gew.-%, bezogen auf das Gesamtgewicht des Color Filter-Filmes.

Das am häufigsten angewandte Verfahren ist Spincoaten oder Slitcoaten. Hierbei werden in geeigneten Photoresistsystemen nacheinander die Bildpunkte, z. B. R, G, B aufgebracht.

Eine aufgebrachte Photoresistschicht wird z. B. Strahlung ausgesetzt, anschließend entwickelt, so dass nur einzelne Bildpunkte der farbigen Schicht zurückbleiben.

Dieses Verfahren wird dann für weitere Farben wiederholt, so dass zum Schluss gleich große R, G, B- oder Y, M, C-Bildpunkte (Pixel) nebeneinander stehen.

### Beispiel 1

Ein 1 I-Laborkneter (Werner & Pfleiderer) wurde mit einer Mischung aus 54 g alpha-Kupferphthalocyanin, 13,5 g handelsüblichem C.I. Pigment Violett 23 (Hostaperm^{®} Violett RL-COF VP2777), 7,5 g epsilon-Kupferphthalocyanin als Keime, 3 g Additiv der Formel (3), 450 g mikronisiertem NaCl, und 120 ml Diethylenglykol befüllt. Die Knetdauer betrug 16 h und die Knettemperatur ca. 95 °C. Nach Beendigung der Knetung wurde die Knetmasse in einen 6 I-Kolben überführt und mit 4000 ml verdünnter Salzsäure (5 gew.-%ig) für 2 h bei Raumtemperatur gerührt. Nach dieser Lösemittelbehandlung wurde die Suspension abfiltriert, der Presskuchen mit Wasser bei 50 °C gewaschen, in einem Konvektionsofen 16 h bei 80 °C getrocknet und mit einer IKA-Mühle pulverisiert. Man erhielt 74,4 g einer PB 15:6/PV 23-Zubereitung.

### Beispiel 2

Eine Mischung aus 54 g alpha-Kupferphthalocyanin, 13,5 g C.I. Pigment Blau 80 (Hostaperm^{®} Blau R5R), 7,5 g epsilon-Kupferphthalocyanin als Keime, 3 g Additiv der Formel (3), 450 g mikronisiertem NaCl, und 120 ml Diethylenglykol wurde in gleicher Weise wie in Beispiel 1 behandelt. Man erhielt 74,1 g einer PB 15:6 / PB 80-Zubereitung.

### Beispiel 3

Eine Mischung aus 8,1 g alpha-Kupferphthalocyanin, 6,0 g handelsüblichem C.I. Pigment Red 122 (Hostaperm^{®} Rosa EB Transp), 0,9 g epsilon-Kupferphthalocyanin als Keime, 0,6 g Additiv der Formel (3), 90 g mikronisiertem NaCl und 27 ml Diethylenglykol wurde in gleicher Weise wie in Beispiel 1 behandelt. Man erhielt 14,1 g einer PB 15:6 / PR 122 -Zubereitung.

### Beispiel 4

Eine Mischung aus 12,7 g alpha-Kupferphthalocyanin, 1,4 g C.I. Pigment Blue 80 (Hostaperm^{®} Blau R5R), 0,9 g epsilon-Kupferphthalocyanin als Keime, 0,6 g Additiv der Formel (3), 90 g mikronisiertem NaCl, und 27 ml Diethylenglykol wurde in gleicher Weise wie in Beispiel 1 behandelt. Man erhielt 13,6 g einer PB 15:6 / PB 80-Zubereitung.

### Beispiel 5

Durch Mischen in einer IKA Universalmühle M20 wurde eine homogene Pulvermischung aus C.I. Pigment Blau 15:6 (als Pigmentkomposition mit dem Naphthyl-Additiv (3), hergestellt gemäß der noch unveröffentlichten deutschen Patentanmeldung AZ 10 2007 001 851.9, Beispiel 6) und einem handelsüblichen C.I. Pigment Violett 23 (Hostaperm^{®} Violett RL-COF VP2777) im Verhältnis 80/20 herstellt.

### Beispiel 6

Durch Mischen in einer IKA Universalmühle M20 wurde eine homogene Pulvermischung aus C.I. Pigment Blau 15:6 (als Pigmentkomposition mit dem Naphthyl-Additiv (3), hergestellt gemäß der noch unveröffentlichten deutschen Patentanmeldung AZ 10 2007 001 851.9, Beispiel 6) und C.I. Pigment Blau 80 (Hostaperm^{®} Blau R5R) im Verhältnis 80/20 hergestellt.

### Beispiel 7

Durch Mischen in einer IKA Universalmühle M20 wurde eine homogene Pulvermischung aus C.I. Pigment Blau 15:6 (als Pigmentkomposition mit dem Naphthyl-Additiv (3), hergestellt gemäß der noch unveröffentlichten deutschen Patentanmeldung AZ 10 2007 001 851.9, Beispiel 6) und einem handelsüblichen C.I. Pigment Red 122 (Hostaperm^{®} Rosa EB Transp) im Verhältnis 60/40 hergestellt.

### Beispiel 8

Durch Mischen in einer IKA Universalmühle M20 wurde eine homogene Pulvermischung aus C.I. Pigment Blau 15:6 (als Pigmentkomposition mit dem Naphthyl-Additiv (3), hergestellt gemäß der noch unveröffentlichten deutschen Patentanmeldung AZ 10 2007 001 851.9, Beispiel 6) und C.I. Pigment Blau 80 (Hostaperm^{®} Blau R5R) im Verhältnis 94/6 hergestellt.

### Beispiel 9

Eine Mischung aus 12,4 g alpha-Kupferphthalocyanin, 1,2 g handelsüblichem C.I. Pigment Red 254 (Irgaphor^{®} Rot BT-CF), 1,4 g epsilon-Kupferphthalocyanin als Keime, 0,6 g Additiv der Formel (3), 90 g mikronisiertem NaCl und 29 ml Diethylenglykol wurde in gleicher Weise wie in Beispiel 1 behandelt. Man erhielt 13,9 g einer PB 15:6/PR 254- Zubereitung.

### Beispiel 10

Durch Mischen in einer IKA Universalmühle M20 wurde eine homogene Pulvermischung aus C.I. Pigment Blau 15:6 (als Pigmentkomposition mit dem Naphthyl-Additiv (3), hergestellt gemäß der noch unveröffentlichten deutschen Patentanmeldung AZ 10 2007 001 851.9, Beispiel 6) und einem handelsüblichem C.I. Pigment Red 254 (Irgaphor^{®} Rot BT-CF) im Verhältnis 92/8 hergestellt.

Ausprüfergebnisse Color Filter:
10 g Pigment (bzw. 10,0 g Pigmentzubereitung), 17 g Disperbyk^{®} 161 (BYK),
1 g Solsperse^{®} 5000 (Avecia) und 72 g PGMEA (Propylenglykolmonomethyletheracetat) werden für 5 h in einem Paintshaker (Disperse^{®} DAS 200 der Firma Lau GmbH) im 250 mL Mahlbecher mit 250 g Zirkonoxidperlen (0,3 mm) dispergiert.

Zur Bestimmung des Kontrastwertes und der Brillanz wird die so hergestellte Mill-base mit Hilfe eines Spincoaters (POLOS Wafer Spinner) auf Glasplatten (SCHOTT, Laser-geschnitten, 10 x 10 cm) aufgetragen und bei einer Schichtdicke von 500 bis 1300 nm der Kontrastwert (TSUBOSAKAELECTRIC CO. LTD, Modell CT-1) gemessen. Die Kontrastwerte werden auf den Farbton, charakterisiert durch den coloristischen Wert y, normiert. Die Brillanz-Werte werden auf eine Schichtdicke von 1000 nm normiert und absolut miteinander verglichen. Die Werte Y, x und y sind charakteristische Daten für die Farbe im CIE-System, wobei Y die Brillianz charakterisiert und x bzw. y den Farbton festlegen.

| Probe / Nuancierfarbmittel | Kontrastwert |
|---|---|
| Beispiel 1 / PV 23 | 1685 |
| Beispiel 2 / PB 80 | 675 |
| Beispiel 3 / PR 122 | 1341 |
| Beispiel 4 / PB 80 | 1130 |
| Beispiel 5 / PV 23 | 961 |
| Beispiel 7 PR 122 | 1256 |
| Beispiel 8 / PB 80 | 951 |
| Beispiel 9 / PR 254 | 1929 |

Alle Beispiele zeigen die für Colorfilter-Anwendungen benötigte hohe Brillanz. Die Phasenreinheit der gebildeten epsilon-Blau Modifikation wurde mittels IR-Spektroskopie und Röntgen-Pulverdiffraktogrammen nachgewiesen. Die Auswertung erfolgte ausschließlich für die Schwingungsbanden bzw. die Reflexe der alpha-, beta- und epsilon-Modifikation des Kupferphthalocyanins.

Alle Beispiele besitzen eine Primärpartikelgröße von < 90 nm und ein Länge/Breiten-Verhältnis von < 3,0 zu 1. Die Bestimmung der Partikelgröße und -form erfolgte mittels Transmissions Elektronen Mikroskopie.

Ausprüfergebnisse Lack:
Farbton, Transparenz und Farbstärke wurden in einem Alkyd-Melamin-Lack gegen ein C.I. Pigment Blue 15:6 - Referenzmuster, hergestellt gemäß DE-A-2 210 072 (Beispiel 4), geprüft. Die Kristallphase wurde mittels RöntgenPulverdiagramm in Transmissionsmessung bestimmt.
Zur Bestimmung der Transparenz wurde ein pigmentierter Alkyd-Melamin-Einbrennlack als Volltonlack zusammen mit der zu vergleichenden Probe nebeneinander auf eine weiße Pappkarte mit schwarzem Balken aufgezogen. Die Herstellung des Volltonlacks erfolgte durch Mahlung einer Mischung aus 4 Teilen eines Pigments bzw. einer Pigmentzubereitung mit 96 Teilen eines Gemischs aus 50 Teilen einer 60 gew.-%igen Lösung von Cocosaldehyd-Melamin-Harz in Butanol, 10 Teilen Xylol und 10 Teilen Ethylenglykolmonomethylether in einer Perlmühle für 30 min. Der erhaltene Volltonlack wurde auf die oben beschriebene Pappkarte aufgetragen und nach 30 min Lufttrocknung für 30 min bei 140°C eingebrannt.

Zur Bestimmung der Farbstärke und des Farbtons wurde ein Aufhellungslack hergestellt, indem 6,0 g des Alkyd-Melamin-Volltonlacks mit 20,0 g eines Weißlacks vermischt wurden. Der erhaltene Aufhellungslack wurde zusammen mit der zu vergleichenden Probe nebeneinander auf eine weiße Pappkarte aufgezogen und nach 30 min Lufttrocknung für 30 min bei 140°C eingebrannt.

Der Farbton wurde bestimmt mit DataColor (CIELAB-System): wenn dH = positive Zahl = rotstichiges Blau, wenn dH = negative Zahl = grünstichiges Blau im Vergleich zum Referenzmuster. Die Farbstärke und ihre Messung ist definiert nach DIN EN ISO 787-26. Als Vergleich (Farbstärke 100 %) dient das entsprechend Referenzmuster.

Unter Transparenz versteht man die reduzierte Dunkelwirkung einer pigmentierten Lackschicht vor einem schwarzen Hintergrund. Sie wird visuell im Vergleich zum Referenzmuster auf einer Skala von -6 bis +6 bewertet: negative Werte = deckender, positive Werte = transparenter. Die coloristischen Daten der in den vorstehenden Beispielen hergestellten Pigmenten oder Pigmentzubereitungen sind in der Tabelle angegeben.

| Probe | Transparenz | Farbton (dH) | Farbstärke |
|---|---|---|---|
| Beispiel 1 | + 6 | 13,14 | 128 % |
| Beispiel 2 | + 6 | 9,59 | 141 % |

## Patentansprüche

1. Pigmentzubereitung aus C.I. Pigment Blau 15:6, enthaltend 0,1 bis 50 Gew.-% eines Nuancierfarbmittels aus der Gruppe C.I. Pigment Blau 80, C.I. Pigment Violett 23, C.I. Pigment Violett 19, C.I. Pigment Red 122,
C.I. Pigment Red 177 und der Diketopyrrolopyrrol-Pigmente, und 0,5 bis 15 Gew.-% eines Additivs der Formel (1), jeweils bezogen auf das Gewicht von
C.I. Pigment Blau 15:6, 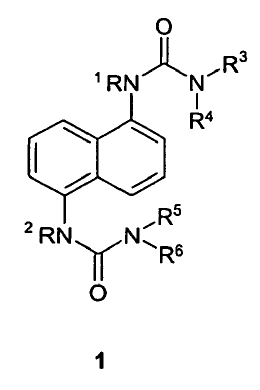 worin
R¹, R², R³, R⁴, R⁵ und R⁶ unabhängig voneinander Wasserstoff; C₁-C₂₂ Alkyl oder C₂-C₂₂ Alkenyl, deren Kohlenstoffkette jeweils durch eine oder mehrere Gruppierungen -O-, -S-, -NR⁹-, -CO- oder SO₂- unterbrochen sein kann und/oder ein- oder mehrfach durch Hydroxy, Halogen, Aryl, Heteroaryl, C₁-C₄ Alkoxy und/oder Acetyl substituiert sein kann;
C₃-C₈ -Cycloalkyl, dessen Kohlenstoffgerüst durch eine oder mehrere Gruppierungen -O-, -S-, -NR¹⁰-, -CO- oder SO₂- unterbrochen sein kann und/oder ein- oder mehrfach durch Hydroxy, Halogen, Aryl, Heteroaryl, C₁-C₄-Alkoxy und/oder Acetyl substituiert sein kann; Dehydroabietyl oder Aryl oder Heteroaryl, wobei
R⁹ und R¹⁰ unabhängig voneinander Wasserstoff oder C₁-C₂₂-Alkyl bedeuten, oder wobei R³, R⁴, R⁵ und R⁶ eine Polyoxyalkylenkette, die gegebenenfalls endständig alkyliert ist, bedeuten.

2. Pigmentzubereitung nach Anspruch 1, **dadurch gekennzeichnet, dass** das Additiv der Formel (1) in einer Menge von 2 bis 5 Gew.-% enthalten ist.

3. Pigmentzubereitung nach Anspruch 1 oder 2, **dadurch gekennzeichnet, dass** das Nuancierfarbmittel C.I. Pigment Blau 80 ist und in einer Menge von 2,5 bis 20 Gew.- %, bezogen auf das Gewicht von C.I. Pigment Blau 15:6, enthalten ist.

4. Pigmentzubereitung nach Anspruch 1 oder 2, **dadurch gekennzeichnet, dass** das Nuancierfarbmittel C.I. Pigment Violett 23 ist und in einer Menge von 2,5 bis 25 Gew.-%, bezogen auf das Gewicht von C.I. Pigment Blau 15:6, enthalten ist.

5. Pigmentzubereitung nach Anspruch 1 oder 2, **dadurch gekennzeichnet, dass** das Nuancierfarbmittel C.I. Pigment Red 122 ist und in einer Menge von 20 bis 40 Gew.-%, bezogen auf das Gewicht von C.I. Pigment Blau 15:6, enthalten ist.

6. Pigmentzubereitung nach Anspruch 1 oder 2, **dadurch gekennzeichnet, dass** das Nuancierfarbmittel C.I. Pigment Red 254 ist und in einer Menge von 1 bis 20 Gew.-%, bezogen auf das Gewicht von C.I. Pigment Blau 15:6, enthalten ist.

7. Pigmentzubereitung nach Anspruch 1 oder 2, **dadurch gekennzeichnet, dass** das Nuancierfarbmittel C.I. Pigment Red 177 ist und in einer Menge von 1 bis 20 Gew.-%, bezogen auf das Gewicht von C.I. Pigment Blau 15:6, enthalten ist.

8. Verfahren zur Herstellung der Pigmentzubereitung nach einem oder mehreren der Ansprüche 1 bis 7, **dadurch gekennzeichnet, dass** man C.I. Pigment Blau 15:6, das Nuancierfarbmittel und das Additiv der Formel (1) miteinander vermischt.

9. Verfahren zur Herstellung der Pigmentzubereitung nach einem oder mehreren der Ansprüche 1 bis 7, **dadurch gekennzeichnet, dass** man Kupferphthalocyanin der alpha-Modifikation, der gamma-Modifikation, oder einer Mischung aus alpha- und gamma-Modifikation, in Gegenwart von 1 bis 50 Gew.-% an kristalliner epsilon-Modifikation, und in Gegenwart von 0,1 bis 50 Gew.-% des Nuancierfarbmittels, sowie in Gegenwart von 0,5 bis 15 Gew.-% des Additivs der Formel (1), einer Nassvermahlung und/oder einer Lösemittelbehandlung in einem organischen Lösemittel bei einer Temperatur zwischen 30 und 250 °C unterzieht, wobei die Gewichtsprozente auf die eingesetzte Gesamtmenge an Kupferphthalocyanin bezogen sind.

10. Verfahren nach Anspruch 9, **dadurch gekennzeichnet, dass** die Nassvermahlung eine Salzknetung mit einem kristallinen Salz in Gegenwart eines organischen Lösemittels ist.

11. Pigmentzubereitung, hergestellt nach dem Verfahren gemäß Anspruch 8 oder 9 oder 10.

12. Verwendung einer Pigmentzubereitung nach einem oder mehreren der Ansprüche 1 bis 7 und 11 zum Pigmentieren von hochmolekularen organischen Materialien.

13. Verwendung nach Anspruch 12 zum Pigmentieren von Kunststoffen, Harzen, Lacken, vorzugsweise Metallic-Lacken, Anstrichfarben, elektrophotographischen Tonern und Entwicklern, Tinten, z. B. Inkjet-Tinten, und Druckfarben.

14. Verwendung einer Pigmentzubereitung nach Anspruch 11 zum Pigmentieren von Farbfiltern.

## Claims

1. A pigment preparation of C.I. Pigment Blue 15:6, including 0.1 % to 50% by weight of a shading colorant selected from the group consisting of C.I. Pigment Blue 80, C.I. Pigment Violet 23, C.I. Pigment Violet 19, C.I. Pigment Red 122, C.I. Pigment Red 177 and the diketopyrrolopyrrole pigments, and 0.5% to 15% by weight of an additive of formula (1), all based on the weight of C.I. Pigment Blue 15:6, 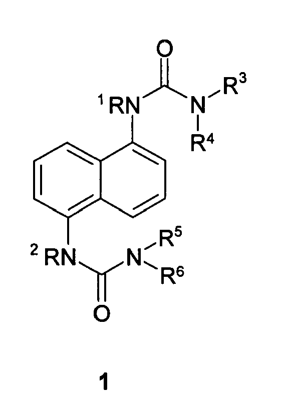 where
R¹, R², R³, R⁴, R⁵ and R⁶ are independently hydrogen; C₁-C₂₂ alkyl or C₂-C₂₂ alkenyl whose carbon chain may in each case be interrupted by one or more groupings -O-, -S-, -NR⁹-, -CO- or SO₂- and/or substituted one or more times by hydroxyl, halogen, aryl, hetaryl, C₁-C₄ alkoxy and/or acetyl;
C₃-C₈-cycloalkyl whose carbon scaffold may be interrupted by one or more groupings -O-, -S-, -NR¹⁰-, -CO- or SO₂- and/or substituted one or more times by hydroxyl, halogen, aryl, hetaryl, C₁-C₄-alkoxy and/or acetyl; dehydroabietyl or aryl or hetaryl,
where
R⁹ and R¹⁰ are independently hydrogen or C₁-C₂₂-alkyl,
or where R³, R⁴, R⁵ and R⁶ are a polyoxyalkylene chain with or without terminal alkylation.

2. The pigment preparation as claimed in claim 1 wherein the additive of formula (1) is included in an amount of 2% to 5% by weight.

3. The pigment preparation as claimed in claim 1 or 2 wherein the shading colorant is C.I. Pigment Blue 80 and is included in an amount of 2.5% to 20% by weight, based on the weight of C.I. Pigment Blue 15:6.

4. The pigment preparation as claimed in claim 1 or 2 wherein the shading colorant is C.I. Pigment Violet 23 and is included in an amount of 2.5% to 25% by weight, based on the weight of C.I. Pigment Blue 15:6.

5. The pigment preparation as claimed in claim 1 or 2 wherein the shading colorant is C.I. Pigment Red 122 and is included in an amount of 20% to 40% by weight, based on the weight of C.I. Pigment Blue 15:6.

6. The pigment preparation as claimed in claim 1 or 2 wherein the shading colorant is C.I. Pigment Red 254 and is included in an amount of 1% to 20% by weight, based on the weight of C.I. Pigment Blue 15:6.

7. The pigment preparation as claimed in claim 1 or 2 wherein the shading colorant is C.I. Pigment Red 177 and is included in an amount of 1% to 20% by weight, based on the weight of C.I. Pigment Blue 15:6.

8. A process for producing the pigment preparation as claimed in one or more of the claims 1 to 7, which comprises mixing C.I. Pigment Blue 15:6, the shading colorant and the additive of formula (1) with one another.

9. A process for producing the pigment preparation claimed in one or more of the claims 1 to 7, which comprises subjecting copper phthalocyanine of the alpha form, of the gamma form or of a mixture of alpha and gamma forms to a wet grind and/or a solvent treatment in an organic solvent at a temperature between 30 and 250°C in the presence of 1% to 50% by weight of crystalline epsilon form and in the presence of 0.1 % to 50% by weight of the shading colorant and also in the presence of 0.5% to 15% by weight of the additive of formula (1), the weight percentages being based on the total amount of copper phthalocyanine used.

10. The process as claimed in claim 9 wherein the wet grind is a salt knead with a crystalline salt in the presence of an organic solvent.

11. A pigment preparation obtained by the process as claimed in claim 8 or 9 or 10.

12. The use of a pigment preparation as claimed in one or more of the claims 1 to 7 and 11 for pigmenting macromolecular organic materials.

13. The use as claimed in claim 12 for pigmenting plastics, resins, coatings, preferably metallic coatings, paints, electrophotographic toners and developers, liquid inks, for example ink jet inks, and printing inks.

14. The use of a pigment preparation as claimed in claim 11 for pigmenting color filters.

## Revendications

1. Préparation de pigment à base de C.I. Pigment Blue 15:6, contenant de 0,1 à 50 % en poids d'un agent colorant de nuançage choisi dans l'ensemble constitué par C.I. Pigment Blue 80, C.I. Pigment Violet 23, C.I. Pigment Violet 19, C.I. Pigment Red 122, C.I. Pigment Red 177 et les pigments dicétopyrrolopyrrole, et de 0,5 à 15 % en poids d'un additif de formule (1), chaque fois par rapport au poids du C.I. Pigment Blue 15:6, 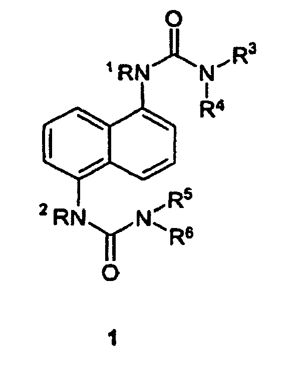 dans laquelle
R¹, R², R³, R⁴, R⁵ et R⁶ représentent, indépendamment les uns des autres, un atome d'hydrogène ; un groupe alkyle en C₁-C₂₂ ou alcényle en C₂-C₂₂, dont la chaîne carbonée peut être interrompue chaque fois par un ou plusieurs groupements -O-, -S-, -NR⁹-, -CO- ou SO₂- et/ou peut être une ou plusieurs fois substituée par hydroxy, halogène, aryle, hétéroaryle, alcoxy en C₁-C₄ et/ou acétyle ;
un groupe cycloalkyle en C₃-C₈, dont le squelette carboné peut être interrompu par un ou plusieurs groupements -O-, -S-, -NR¹⁰-, -CO- ou SO₂- et/ou peut être une ou plusieurs fois substitué par hydroxy, halogène, aryle, hétéroaryle, alcoxy en C₁-C₄ et/ou acétyle ; un groupe déhydroabiétyle ou aryle ou hétéroaryle,
R⁹ et R¹⁰ représentant, indépendamment l'un de l'autre, un atome d'hydrogène ou un groupe alkyle en C₁-C_{22,} ou R³, R⁴, R⁵ et R⁶ représentant, indépendamment les uns des autres, une chaîne polyoxyalkylène, qui est éventuellement alkylée en bout de chaîne.

2. Préparation de pigment selon la revendication 1, **caractérisée en ce que** l'additif de formule (1) est contenu en une quantité de 2 à 5 % en poids.

3. Préparation de pigment selon la revendication 1 ou 2, **caractérisée en ce que** l'agent colorant de nuançage est C.I. Pigment Blue 80 et est contenu en une quantité de 2,5 à 20 % en poids, par rapport au poids du C.I. Pigment Blue 15:6.

4. Préparation de pigment selon la revendication 1 ou 2, **caractérisée en ce que** l'agent colorant de nuançage est C.I. Pigment Violet 23 et est contenu en une quantité de 2,5 à 25 % en poids, par rapport au poids du C.I. Pigment Blue 15:6.

5. Préparation de pigment selon la revendication 1 ou 2, **caractérisée en ce que** l'agent colorant de nuançage est C.I. Pigment Red 122 et est contenu en une quantité de 20 à 40 % en poids, par rapport au poids du C.I. Pigment Blue 15:6.

6. Préparation de pigment selon la revendication 1 ou 2, **caractérisée en ce que** l'agent colorant de nuançage est C.I. Pigment Red 254 et est contenu en une quantité de 1 à 20 % en poids, par rapport au poids du C.I. Pigment Blue 15:6.

7. Préparation de pigment selon la revendication 1 ou 2, **caractérisée en ce que** l'agent colorant de nuançage est C.I. Pigment Violet 177 et est contenu en une quantité de 1 à 20 % en poids, par rapport au poids du C.I. Pigment Blue 15:6.

8. Procédé pour la production de la préparation de pigment selon une ou plusieurs des revendications 1 à 7, **caractérisé en ce qu'**on mélange entre eux le C.I. Pigment Blue 15:6, l'agent colorant de nuançage et l'additif de formule (1).

9. Procédé pour la production de la préparation de pigment selon une ou plusieurs des revendications 1 à 7, **caractérisé en ce qu'**on soumet de la phtalocyanine de cuivre de la forme alpha, de la forme gamma ou d'un mélange des formes alpha et gamma, en présence de 1 à 50 % en poids de la forme epsilon cristalline, et en présence de 0,1 à 50 % en poids de l'agent colorant de nuançage, ainsi qu'en présence de 0,5 à 15 % en poids de l'additif de formule (1), à un broyage par voie humide et/ou à un traitement par solvant dans un solvant organique à une température comprise entre 30 et 250 °C, les pourcentages en poids se rapportant à la quantité utilisée de phtalocyanine de cuivre.

10. Procédé selon la revendication 9, **caractérisé en ce que** le broyage par voie humide est un broyage de sel avec un sel cristallin en présence d'un solvant organique.

11. Préparation de pigment, produite conformément au procédé selon la revendication 8 ou 9 ou 10.

12. Utilisation d'une préparation de pigment selon une ou plusieurs des revendications 1 à 7 et 11, pour la pigmentation de matières organiques de masse moléculaire élevée.

13. Utilisation selon la revendication 12, pour la pigmentation de matières plastiques, de résines, de laques, de préférence de laques métallisées, de peintures, de toners et développeurs électrophotographiques, d'encres, par exemple d'encres pour impression par jet d'encre, et d'encres d'imprimerie.

14. Utilisation d'une préparation de pigment selon la revendication 11, pour la pigmentation de filtres colorés.
